# EUROPEAN PATENT SPECIFICATION

(11) **EP 3 128 169 B1**
(45) Date of publication and mention of the grant of the patent: **21.02.2018**
(21) Application number: 15180104.0
(22) Date of filing: 07.08.2015
(51) Int. Cl.: F03D 1/06

(54) **ROTOR BLADE WITH ACTUATOR ARRANGEMENT**
ROTORBLATT MIT AKTUATORANORDNUNG
PALE DE ROTOR AVEC AGENCEMENT D'ACTIONNEUR

(43) Date of publication of application: 08.02.2017
(73) Proprietor: Siemens Aktiengesellschaft, 80333 München (DE)
(72) Inventor: Enevoldsen, Peder Bay, 7100 Vejle (DK); Gonzalez, Alejandro Gomez, 8000 Aarhus (DK); Loeven, Alex, 7400 Herning (DK)

(56) References cited:
- EP-A2- 2 233 735
- WO-A2-2010/023278
- WO-A2-2011/057633
- GB-A- 2 486 876

## Description

The present invention relates to an actuator arrangement for moving an aerodynamic device relative to a rotor blade of a wind turbine. The invention furthermore relates to a movable trailing edge arrangement comprising such an actuator arrangement and an aerodynamic device. Finally, the invention relates to a rotor blade arrangement comprising a rotor blade and such an actuator arrangement.

It is well-known to add aerodynamic devices to a wind turbine rotor blade at the trailing edge of the wind turbine rotor blade. These aerodynamic add-ons, which may for example be a flap, a spoiler or the like, can be used to enhance the aerodynamic performance of a rotor during normal operation as well as during off-design conditions. Furthermore, they can also be used to alter the loads which are experienced by the wind turbine rotor blades and the remaining components of the wind turbine. The field of application of aerodynamic add-ons on wind turbine rotor blades is wide; thus, further applications of aerodynamic add-ons on rotor blades are possible, too. This invention discloses a novel approach of actuating such an aerodynamic add-on at the trailing edge of the rotor blade.

One example for an aerodynamic device which is activated by an actuation system is disclosed in the European patent application EP 1 995 455 A1. Therein, a flap is disclosed, which is arranged and prepared for being attached to the trailing edge section of a rotor blade and which comprises an actuation system for moving the flap relative to the rotor blade. Note that in the invention disclosed in the mentioned European patent application, a whole system comprising a flap and an actuation system is attached to the trailing edge section of the rotor blade.

Another prior art document which is relevant in this context is the international patent application WO 2008/003330 A1. Therein, a deformable trailing edge section of a wind turbine blade is disclosed, wherein the shape of the deformable trailing edge section is changed by fluid which is flowing through one or more cavities. Again, a whole system comprising a flap and an actuation system is attached to the trailing edge section of the rotor blade.

Yet another prior art document disclosing an aerodynamic device with an activation system is given by the international patent application WO 2008/132235 A1. Therein, a flap with an activation system is disclosed, wherein the flap with the activation system is attached to the trailing edge section of a rotor blade. Note that in the mentioned patent application the active flap is a substantial part of the rotor blade. In other words, the flap is not destined to be attached to a fully manufactured rotor blade, for example as a retrofit, but it is already designed together with the rotor blade. Thus, this concept is a built-in concept, where either the pressure side skin or the suction side skin is integral with the remaining body of the rotor blade or at least firmly secured with it.

Further examples of known trailing edge flaps are disclosed in the patent applications WO 2010/023278 A2 and EP 2 233 735 A2.

A drawback of the state of the art in principle is that a whole system comprising the flap and the activation system is attached to the trailing edge section of the rotor blade. It is not foreseen to exchange the aerodynamic device or to provide an activation system which is independent of the specific aerodynamic device which is to be connected with the activation system.

Thus, there exists the desire to provide an interface for an aerodynamic add-on to be interchangeably placed on the interface.

This objective is solved by the subject matter of the independent claims. Advantageous embodiments and modifications are disclosed in the dependent claims.

According to the invention there is provided an actuator arrangement for moving an aerodynamic device relative to a rotor blade of a wind turbine. The actuator arrangement comprises an attachment portion which is arranged and prepared for attaching the actuator arrangement at the trailing edge section of the rotor blade; a connection portion which is arranged and prepared for connecting the aerodynamic device with the actuator arrangement; a hinge portion, which connects the attachment portion and the connection portion, wherein the hinge portion enables a relative movement of the connection portion with regard to the attachment portion about a rotational axis which is orientated in substantially spanwise direction of the rotor blade; and a pneumatic actuator for inducing the rotational movement of the connection portion relative to the attachment portion, wherein the movement is a reversible movement. The actuator arrangement is arranged and prepared for detachably connecting the aerodynamic device to the connection portion.

A key aspect of the present invention is the provision of an external actuator which is arranged and prepared for being attached to an existing rotor blade and which provides an interface for interchangeably attaching an aerodynamic device. Thus, the focus is not on providing a complete system such as e.g. a single piece to attach at the trailing edge section of the rotor blade. Moreover, the invention is concerned on solely providing the actuator function. The actuator arrangement as such may consist of several parts or it may be manufactured as one single piece. This means that the mentioned portions, i.e. the attachment portion, the connection portion and the hinge portion, refer in a first alternative to different sections or areas of one single piece. In a second alternative, these portions represent separate parts or components which are connected with each other and form together the actuator arrangement. In any case, however, the aerodynamic device is separate from the actuator arrangement. This ensures that the aerodynamic device can be exchanged and detached from the actuator arrangement easily.

An advantage of such a concept of an interchangeable aerodynamic device is that both the actuator arrangement and the aerodynamic device can be optimized separately.

Furthermore, it is of a great benefit if the aerodynamic device can be exchanged easily. For example during servicing the rotor blade one may easily exchange and substitute a damaged aerodynamic device by a new aerodynamic device.

Furthermore, an upgrade can easily be carried out, wherein an optimized and more developed aerodynamic device substitutes an already existing aerodynamic device which is attached to the trailing edge section of the rotor blade.

Yet another advantage is that during transportation of the rotor blade the aerodynamic device can be detached. Thus, the size of the rotor blade is slightly reduced and the rotor blade is less sensitive to damages during transportation.

The hinge portion may in practice be realized by different concepts. First, by mechanical parts which enable a rotational or pivoting movement of the aerodynamic device relative to the rotor blade. Second, by a flexible material, wherein the flexibility is chosen such that the hinge portion bends at a predetermined load and a reversible bending movement is ensured.

An actuator is typically understood as any device which transfers input signals to output movements. Actuators may generally be realized as hydraulic, pneumatic or purely mechanical means, to give some examples. This invention focuses on the use of pneumatic actuators for inducing the rotational movement of the connection portion relative to the attachment portion.

The rotational axis about which the attachment portion and the connection portion rotate can be realized in practice by a separate component which extends in longitudinal direction of the rotor blade. Alternatively, the rotational axis may just be an imaginary axis, which virtually extends through a part of e.g. flexible material.

Finally, note that in the context of the present application, a wind turbine refers to a device for transforming kinetic energy from the wind into rotational energy, the latter being subsequently transformed into electricity.

In an advantageous embodiment of the invention, the actuator arrangement is arranged and prepared to be attached to the outer surface of the trailing edge section of the rotor blade. Thus, the actuator arrangement may be described as being located externally with regard to the rotor blade.

An advantage of attaching the actuator arrangement at the outer surface of the trailing edge section is that the design and manufacturing of the rotor blade is not dependent whether an actuator arrangement is attached to the trailing edge section or not.

The actuator arrangement may both be attached to thick, blunt trailing edges as well as conventional sharp, thin trailing edges. In contrast, for example, to the cited international patent application WO 2008/132235 A1, wherein the activatable trailing edge flap is fully integrated in the rotor blade, in the present application the provision of the actuator arrangement and corresponding attachment to the rotor blade is separate. This allows for a great flexibility in providing the rotor blades with active aerodynamic devices. This also allows a great flexibility in the application of the activated flaps to rotor blades.

As has been mentioned in the introductory part, there exist many different types of aerodynamic devices for adding to the trailing edge section of a rotor blade. A popular type of aerodynamic device is a device which has the shape of a flap. A flap is characterized in that it has spanwise and chordwise dimensions which are relatively large compared to its thickness. Additionally, its spanwise extension is often greater than its chordwise extension. In other words, a flap may extend to a considerable length along the trailing edge of the rotor blade.

In another advantageous embodiment of the invention, the hinge portion is made of elastic material.

This material choice has the advantage that the corresponding pivoting movement of the respective portion of the actuator arrangement does not comprise any rotating mechanical parts which are moving against each other. Avoiding these moving parts is especially advantageous for wind turbine sites which are difficult to access and thus where servicing is difficult.

In another advantageous embodiment, the actuator is inflatable by a pressurized gaseous medium in order to induce the rotational movement of the connection portion relative to the attachment portion.

In other words, the actuator is activated by applying a pressurized gas or by sucking the gas out. The use of pressurized or depressurized gases is advantageous because it poses no risk to the environment in case of a leakage, as opposed to many other liquid media, in particular hydraulic oil. The drawback of gaseous media in comparison to liquid media is the slower response time during compression or expansion. To overcome this drawback, the volume of gas is kept small.

Exemplarily, the actuator is an elastic hose.

An elastic hose which is also referred to as an elastic tube or pipe is well-suited for being arranged in spanwise direction along the trailing edge of the rotor blade. Furthermore, realizing the actuator as an elastic hose is a well-known and well proven concept for actuators. The use of a tube, or any other prismatic geometry is advantageous because it can be manufactured in an extrusion process, ensuring high quality and low cost of the pieces.

In another advantageous embodiment, a locally variable actuator output is achieved based on a single actuator input pressure by means of a locally varying configuration of the actuator arrangement.

While in the prior art many documents only focus on a suitable actuator mechanism independent on the spanwise position, the inventors of the present invention realized that a locally variable actuator output has many advantages. By this the changes of the load distribution or lift or noise or the like which is pursued by the moveable aerodynamic device can be further optimized. In the prior art this has often be solved by separately activatable aerodynamic devices. Thus, in the prior art there are often realized a plurality of flaps one adjacent to each other along the trailing edge, wherein each flap or each subgroup of flaps is activated separately.

In one embodiment of this invention, however, one single actuator input pressure is applied, and by the locally varying configuration of the actuator arrangement, a locally variable actuator output is achieved. The local variation of the actuator output may be achieved by locally varying the shape of the actuator. For example, if the actuator is an elastic hose the diameter of the hose may be varied at different spanwise positions. Furthermore, the local variation of the actuator output may also be achieved by locally varying the shape and/or the stiffness of the hinge portion and/or of the attachment portion and/or of the connection portion of the actuator arrangement.

In other words, the design of the actuator arrangement may intentionally be changed in spanwise direction according to the desired output and impact of the actuator.

The invention is also directed towards a moveable trailing edge arrangement, wherein the moveable trailing edge arrangement comprises an aerodynamic device and an actuator arrangement as described above. The attachment portion, the connection portion and the hinge portion build one single piece. The aerodynamic device builds another single piece. Both single pieces are connected with each other.

The moveable trailing edge arrangement differs from the prior art in that two separate parts are provided and subsequently connected with each other. Thus, the aerodynamic device, which is one of the two pieces, can easily be interchanged at a later stage. However, as realized on the rotor blade, the moveable trailing edge arrangement can also be perceived as one part or feature which is destined for one efficiency enhancement goal.

Finally, the invention is also directed towards a rotor blade arrangement comprising a rotor blade of a wind turbine and an actuator arrangement according to one of the described embodiments. Embodiments of the invention are now described, by way of example only, with reference to the accompanying drawings, of which:
- Figure 1: shows a rotor blade of a wind turbine;
- Figure 2: shows a first embodiment of a moveable trailing edge arrangement in a deflated state;
- Figure 3: shows the first embodiment of a moveable trailing edge arrangement in an inflated state;
- Figure 4: shows a second embodiment of a moveable trailing edge arrangement;
- Figure 5: shows a first alternative of a third embodiment of a moveable trailing edge arrangement in a deflated state;
- Figure 6: shows the first alternative of the third embodiment of a moveable trailing edge arrangement in an inflated state;
- Figure 7: shows a second alternative of the third embodiment of a moveable trailing edge arrangement in an inflated state;
- Figure 8: shows a fourth embodiment of a moveable trailing edge device in an explosion view;
- Figure 9: shows the fourth embodiment of a moveable trailing edge arrangement in a deflated state;
- Figure 10: shows the fourth embodiment of the moveable trailing edge arrangement in an inflated state;
- Figure 11: shows a fifth embodiment of a moveable trailing edge arrangement in a deflated state;
- Figure 12: shows the fifth embodiment of a moveable trailing edge arrangement in an inflated state;
- Figure 13: shows another realization of an actuator;
- Figure 14: shows a perspective view of the actuator of Figure 13 being implemented in an actuator arrangement;
- Figure 15: shows a cross-sectional view of a sixth embodiment of a moveable trailing edge arrangement; and
- Figure 16: shows an explosion view of the sixth embodiment of a moveable trailing edge arrangement.

The illustration in the drawings is in schematic form. It is noted that in different figures, similar or identical elements may be provided with the same reference signs.

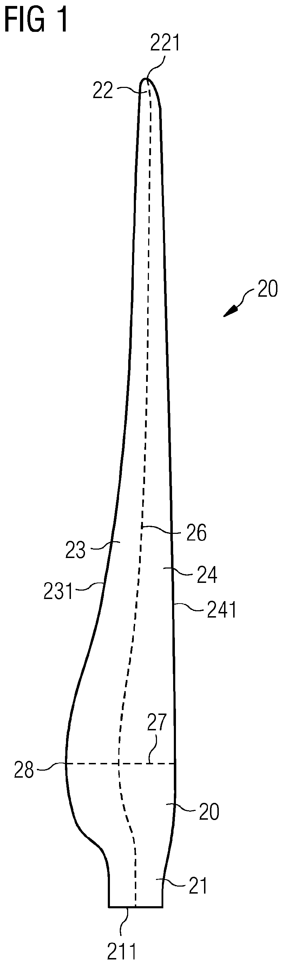

Figure 1 shows a rotor blade 20 of a wind turbine. The rotor blade 20 comprises a root section 21 with a root 211 and a tip section 22 with a tip 221. The root 211 and the tip 221 are virtually connected by the span 26 which follows the shape of the rotor blade 20. If the rotor blade were a rectangular shaped object, the span 26 would be a straight line. However, as the rotor blade 20 features a varying thickness, the span 26 is slightly curved, i.e. bent as well. Note that if the rotor blade 20 was bent itself, then the span 26 would be bent, too.

The rotor blade 20 furthermore comprises a leading edge section 24 with a leading edge 241 and a trailing edge section 23 with a trailing edge 231.

The trailing edge section 23 surrounds the trailing edge 231. Likewise, the leading edge section 24 surrounds the leading edge 241.

At each spanwise position, a chord line 27 which connects the leading edge 241 with the trailing edge 231 can be defined. Note that the chord line 27 is perpendicular to the span 26. The shoulder 28 is defined in the region where the chord line comprises a maximum chord length.

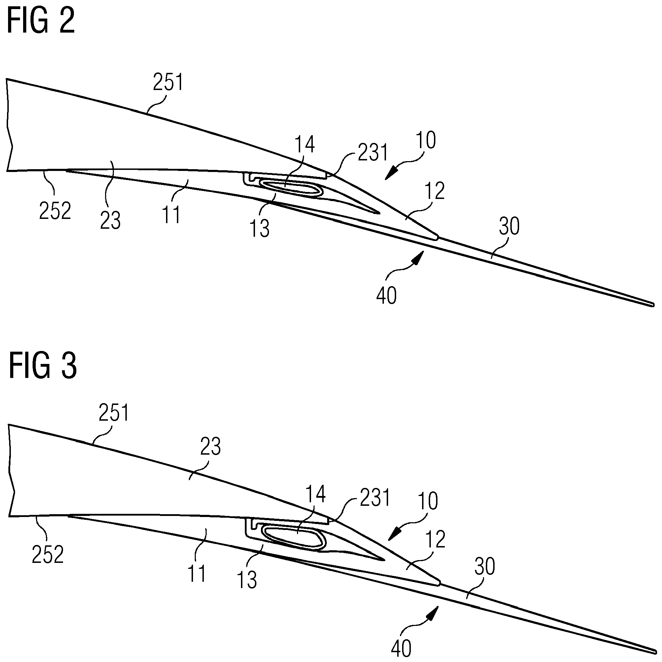

Figures 2 and 3 illustrate a first embodiment of a moveable trailing edge arrangement.

Figure 2 shows the actuator arrangement in a deflated state. This means that no or only little pressurized gas is applied to the actuator 14. The actuator is realized by an elastic hose which extends in spanwise direction substantially parallel to the trailing edge 231 of the rotor blade. The whole actuator arrangement 10 is attached to the trailing edge section 23 of the rotor blade. In particular, the actuator arrangement 10 is attached to the pressure side 252 and the sharp, thin trailing edge 231 of the rotor blade. The transition between the suction side 251 and the actuator arrangement 10 is configured as a smooth transition in order to avoid the generation of additional vortices. This is nevertheless not a requirement for the performance of the device. This means that an abrupt jump from the suction side 251 of the rotor blade, to the suction side of the connection portion 12 is also possible

The actuator arrangement 10 consists of two pieces. The actuator 14 as such, which is realized as an elastic hose in the first embodiment, and a remaining component which comprises the following portions: an attachment portion 11, a connection portion 12 and a hinge portion 13.

The attachment portion 11 refers to that part of the actuator arrangement 10 where the actuator arrangement 10 is attached to the pressure side 252 of the trailing edge section 23 of the rotor blade.

The hinge portion 13 refers to that part of the actuator arrangement 10 where most part of the bending of the material takes place.

The connection portion 12 of the actuator arrangement 10 refers to that portion of the actuator arrangement 10 which is destined for receiving the aerodynamic device 30. In the example illustrated in Figures 2 and 3, the aerodynamic device 30 is realized by a flap.

Figure 3 shows the first embodiment in an inflated state. In particular, the actuator, i.e. the elastic hose, is pressurized and consequently features a larger cavity. In other words, while the actuator 14 in Figure 2 has a relatively flat shape, the actuator 14 in Figure 3 has a more round and more extended shape. As the actuator 14 is arranged inside the actuator arrangement 10, the blowing up of the actuator 14 has as a consequence a change in the shape and configuration of the actuator arrangement 10. Thus, parts of the actuator arrangement 10 are bent and the orientation of the connection portion 12 relative to the trailing edge section 23 of the rotor blade is changed. The change of shape of the arrangement 10 depends mainly on the geometry and the stiffness of the attachment portion 11. The aerodynamic device 30 does not change its position or orientation relative to the connection portion 12. But as the actuator arrangement 10 changes its orientation and configuration relative to the rotor blade, also the aerodynamic device 30 changes its orientation towards the trailing edge section 23 of the rotor blade. Through careful design of the geometry of the actuator arrangement it is possible to actuate the component in different states with the same type and strength of the input signal. This greatly simplifies the requirements for the supply of control systems, while maintaining the freedom to design a highly efficient rotor blade for increase of the annual energy production and/or load alleviation. In other words, the deflection of the aerodynamic device can be controlled independently throughout the span of the rotor blade using single and simple input signals.

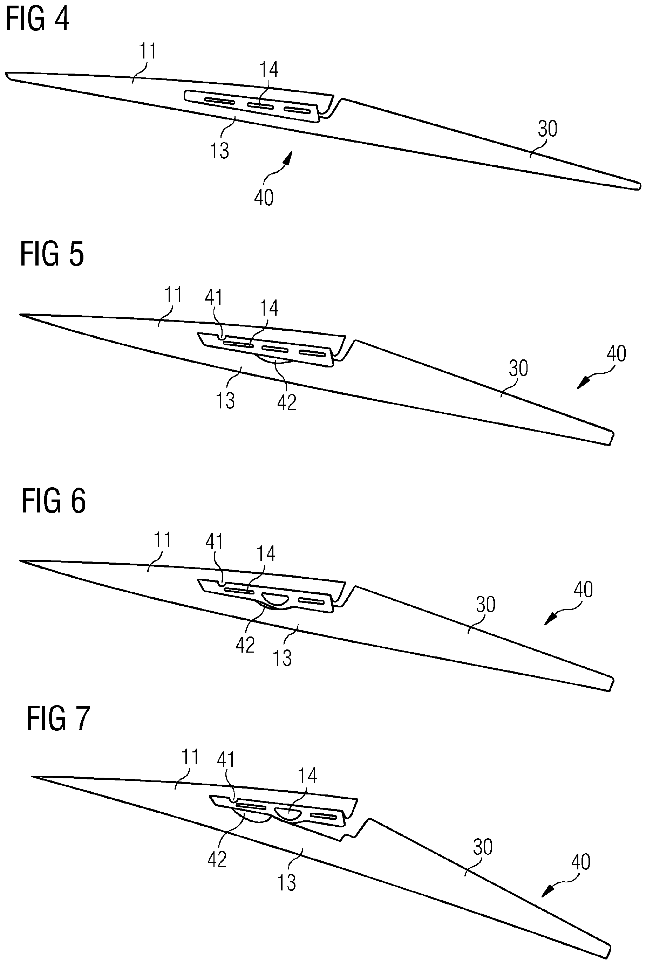

Furthermore, the actuator arrangement can be designed in a geometrically suitable manner such there is good shape compatibility and no relative sliding with the flexible hinge portion of the rotor blade. This is illustrated in more detail in the Figures 4 to 7.

Figure 4 shows a second embodiment of a moveable trailing edge arrangement 40.

The moveable trailing edge arrangement 40 comprises an attachment portion 11. The attachment portion 11 represents that part of the moveable trailing edge arrangement 40, by which the moveable trailing edge arrangement 40 is destined to be attached to the trailing edge section of a rotor blade.

The moveable trailing edge arrangement 40 furthermore comprises an aerodynamic device 30, which is shaped as a flap in the embodiment shown in Figure 4. The aerodynamic device 30 is detachably connected with the remaining part of the moveable trailing edge arrangement, which is also referred to as the actuator arrangement. Both parts, the aerodynamic device 30 and the actuator arrangement, are shown in its connected state in Figure 4 and can thus not be discerned as separate pieces.

The moveable trailing edge arrangement 40 furthermore comprises a hinge portion 13 and an actuator 14. The hinge portion 13 is defined as that part of the moveable trailing edge arrangement 40 which enables the pivotal movement of the aerodynamic device 30 relative to the attachment portion 11 of the moveable trailing edge arrangement 40. The hinge portion 13 in Figure 4 is made of elastic material. In other words, the elasticity of the material of the actuator arrangement is chosen such at the hinge portion that a reversible pivoting movement of that part of the actuator arrangement is enabled upon a predetermined load on the hinge portion 13.

Finally, the moveable trailing edge arrangement 40 comprises an actuator 14. The actuator comprises three flow channels, each of which are made of an elastic material. The different flow channels are activated by means of a pressurized medium, e.g. pressurized air. Upon activation, the respective flow channel expands and induce deflection of the aerodynamic device 30.

By selectively choosing the flow channel(s) which is/ are to be activated, different degrees of deflection of the aerodynamic device 30 can be obtained. Note that a single input signal is sufficient due to the plurality of provided flow channels and a selective choice of one or more of these existing flow channels.

Figures 5 to 7 show two variants of the second embodiment as illustrated in Figure 4, which are in the following summarized and referred to as the third embodiment of a moveable trailing edge arrangement 40.

The single portions of the third embodiment are similar to the respective portions of the second embodiment and shall not be repeated for the sake of clarity. The third embodiment differs from the second embodiment that it additionally comprises a built-in indentation 42. This indentation 42 has the purpose of providing a further "lever" or "degree of freedom" how to selectively influence the deflection of the aerodynamic device 30 along the spanwise direction.

The indentation 42 is located below the middle flow channel in the first alternative of the third embodiment, see Figures 5 and 6. Consequently, an expansion of the middle flow channel, i.e. an activation of the middle flow channel, does not have any impact on the deflection of the aerodynamic device 30, as the expanded middle flow channel completely fills the built-in indentation 42. Thus, by selectively providing such an indentation 42 at certain spanwise positions of the rotor blade, the pivoting movement of the hinge portion 13 can be partially or even fully avoided.

In the second alternative of the third embodiment, cf. Figure 7, the built-in indentation 42 is located below the upstream flow channel. This has the consequence that an activation of the middle flow channel has no neutralizing effect regarding the deflection of the aerodynamic device 30. However, there would be neutralizing effect if the upstream flow channel was activated.

Both alternatives of the third embodiment also comprise an alignment pin 41 for preventing a relative sliding of the actuator 14, i.e. the various elastic flow channels, with regard to the remaining structure of the actuator arrangement.

The thickness of the trailing edge section 23 varies substantially when the actuator 14 is in its inflated state.

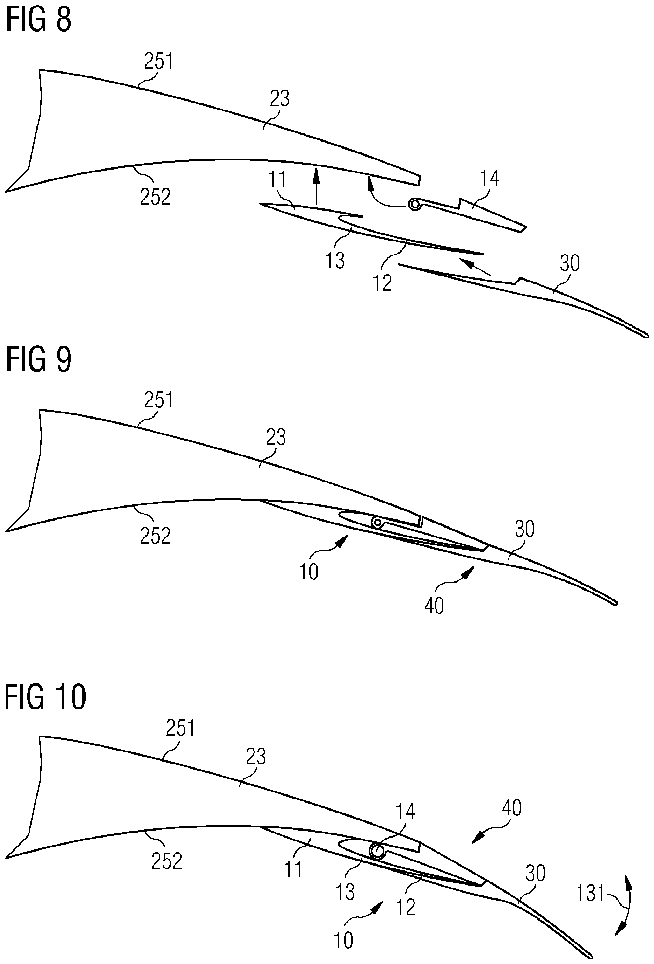

Figures 8 to 10 illustrate a fourth embodiment of a moveable trailing edge arrangement.

Figure 8 shows an explosion view, thus visualizing the different components of the moveable trailing edge arrangement. The moveable trailing edge arrangement again consists of three separate pieces, namely the aerodynamic device 30 which is interchangeable, the actuator 14 as such and the remaining portions of the actuator arrangement. This design is slightly different in that the actuator 14 not only comprises the inflatable pressure hose but also comprises adjacent components of the actuator arrangement. However, the overall effect and impact is similar. Figure 9 shows the fourth embodiment of the actuator arrangement in a deflated state, while Figure 10 illustrates the same embodiment in an inflated state of the actuator 14.

All embodiments can be used throughout different regions along the span of the rotor blade. Preferably they are used in the outboard section of the rotor blade. In the inboard section of the rotor blade, the actuator arrangement can be shaped as a Gurney flap.

In Figure 10 also the rotational movement 131 of the flap is visualized.

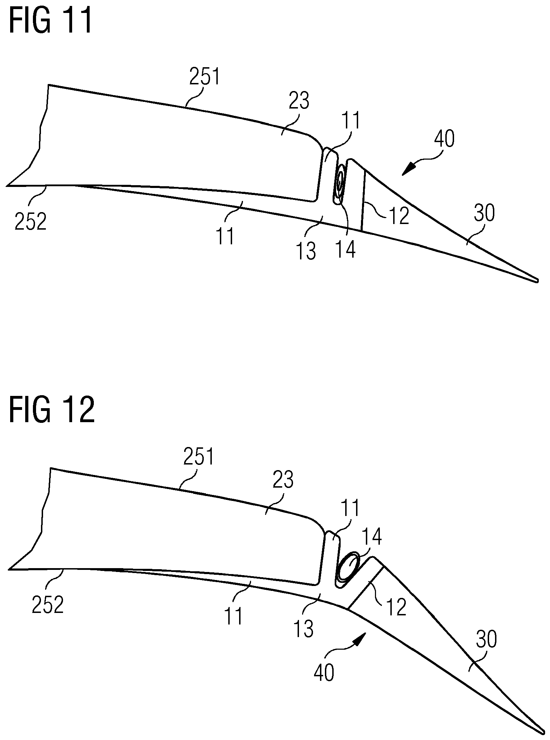

Figures 11 and 12 show a fifth embodiment of a moveable trailing edge arrangement 40. The moveable trailing edge arrangement again consists of the aerodynamic device 30, an actuator 14 and the rest of the actuator arrangement. While the first embodiment has been adapted to a thin, sharp trailing edge 231 of the rotor blade, the fifth embodiment shown in Figures 11 and 12 is optimized for relatively thick trailing edges 231. Additionally, as can be seen in Figures 11 and 12, the actuator 14 is a real external actuator. For protection against dust, dirt and moisture, the actuator 14 may be covered at the suction side by a respective slidable cover. In this context, "slidable" refers to the fact that the chordwise extension of the gap at the suction side where the actuator is located depends and varies on the bending state of the actuator arrangement. This gap is much wider in the inflated state of the actuator compared to the deflated state. Thus, if the gap is covered by a cover, this cover may partially slide along the trailing edge section of the rotor blade during bending of the aerodynamic device.

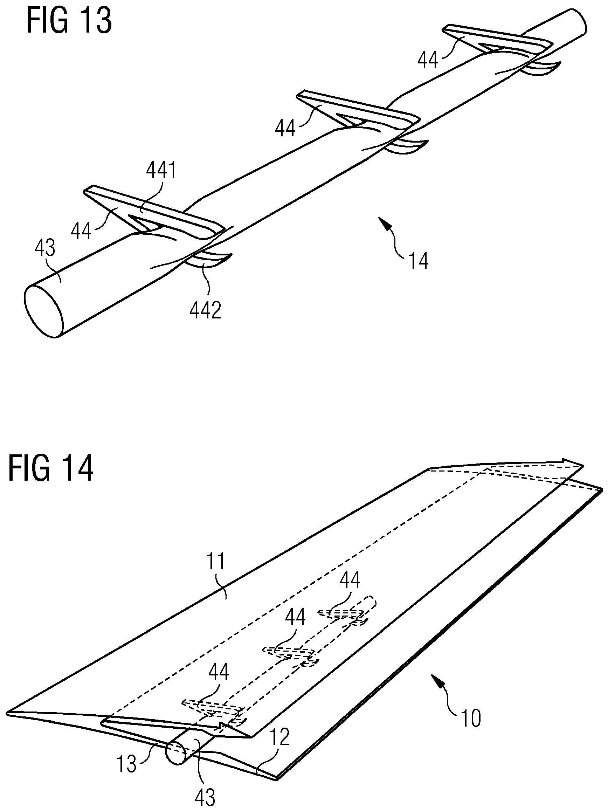

Figures 13 to 16 show different aspects and views of the sixth embodiment of a moveable trailing edge arrangement 40.

In particular, Figure 13 shows an elastic hose building a flow channel 43, which acts as an actuator 14. The flow channel 43 may be made of a soft material such as e.g. silicone. The flow channel 43 is expandable. The flow channel 43 is arranged and prepared such that a pressurized medium, such as pressurized air, can be guided and pumped into the flow channel 43. The flow channel 43 for the pressurized medium can be closed at one end such that the medium cannot exit at that end. This approach is also referred to as a "one-way" approach. It has the advantage that no return channel for the medium is needed.

The pressurized medium inside the flow channel, such as the pressurized air, may be pre-heated. This has the advantage that icing of the actuator arrangement is reduced or even avoided at all.

The elastic hose is retained by a plurality of clamps 44. The clamps are arranged at equal or varying distances to each other along the hose. Each clamp 44 comprises an upper part 441 and a lower part 442. The clamps 44 are destined for connecting the actuator 14, i.e. the elastic hose, with the remaining actuator arrangement 10. Exemplarily, the clamps 44 are made of an elastomeric material, e.g. rubber.

In Figure 13, the elastic hose is only slightly inflated. Consequently, the pressure in the elastic hose is not enough to press the clamps 44 apart. When the pressure in the elastic hose is increased, i.e. the elastic hose is in an inflated state, the upper part 441 and the lower part 442 of the clamp are pushed apart from each other.

Figure 14 shows a perspective view of the actuator 14 as described above. The actuator 14, i.e. the elastic hose, is connected via the clamps 44 to the remaining part of the actuator arrangement 10. This remaining part is exemplarily made of a thermoplastic and/or thermosetting polymer and comprises: an attachment portion 11 for attaching the actuator arrangement 10 to the trailing edge section of a rotor blade; a connection portion 12 for detachably connection an aerodynamic device to the actuator arrangement 10; and a hinge portion 13 which reversibly bends when the elastic hose expands or contracts. In the embodiment shown in Figure 14, the hinge portion 13 refers to the (virtual) section just below the elastic hose.

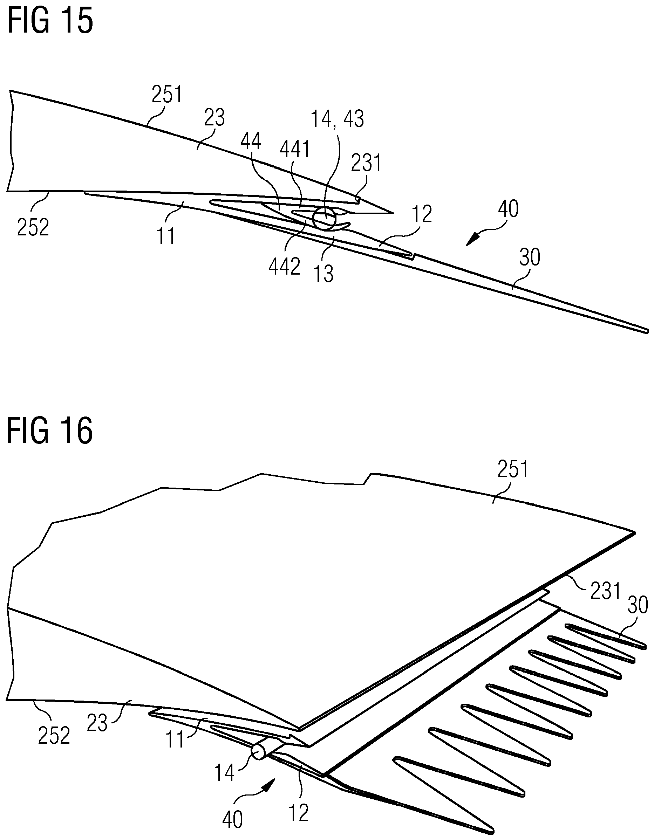

Figure 15 shows a cross-sectional view of the actuator arrangement 10 as attached to the pressure side 252 of a rotor blade at its trailing edge section 23. The actuator arrangement 10 is attached to the trailing edge section 23 via its attachment portion 11. The aerodynamic device 30, which is connected to the actuator arrangement 10 via its connection portion 12, is orientated with regard to the rotor blade by a first angle. The elastic hose is in a contracted, i.e. in a deflated state.

By expanding, i.e. inflating the elastic hose, the lower parts 442 of the clamps 44 are tilted downwards. Thus, also the hinge portion 13 bends downwards, and, consequently, the orientation of the aerodynamic device relative to the rotor blade changes.

Finally, Figure 16 shows an explosion view of the moveable trailing edge arrangement 40 described above. It can be seen that the aerodynamic device 30 is shaped as a serrated panel. Other shapes and configurations are possible as well, of course.

## Claims

1. Actuator arrangement (10) for moving an aerodynamic device (30) relative to a rotor blade (20) of a wind turbine, the actuator arrangement (10) comprising
- an attachment portion (11) which is arranged and prepared for attaching the actuator arrangement (10) at the trailing edge section (23) of the rotor blade (20),
- a connection portion (12) which is arranged and prepared for connecting the aerodynamic device (30) with the actuator arrangement (10),
- a hinge portion (13) which connects the attachment portion (11) and the connection portion (12), wherein the hinge portion (13) enables a relative movement of the connection portion (12) with regard to the attachment portion (11) about a rotational axis which is orientated in substantially spanwise direction of the rotor blade (20), and
- a pneumatic actuator (14) for inducing the rotational movement (131) of the connection portion (12) relative to the attachment portion (11), wherein the movement is a reversible movement
**characterized in that**
- the actuator arrangement (10) is arranged and prepared for detachably connecting the aerodynamic device (30) to the connection portion (12).

2. Actuator arrangement (10) according to claim 1,
wherein the actuator arrangement (10) is arranged and prepared to be attached to the outer surface of the trailing edge section (23) of the rotor blade (20), such that the actuator arrangement (10) is located externally with regard to the rotor blade (20).

3. Actuator arrangement (10) according to one of the preceding claims,
wherein the aerodynamic device (30) has the shape of a flap.

4. Actuator arrangement (10) according to one of the preceding claims,
wherein the hinge portion (13) is made of an elastic material.

5. Actuator arrangement (10) according to one of the preceding claims,
wherein the actuator (14) is inflatable by a pressurized gaseous medium in order to induce the rotational movement (131) of the connection portion (12) relative to the attachment portion (11).

6. Actuator arrangement (10) according to one of the preceding claims,
wherein the actuator (14) is an elastic hose.

7. Actuator arrangement (10) according to one of the preceding claims,
wherein, based on a single actuator input pressure, a locally variable actuator output is achieved by means of a locally varying configuration of the actuator arrangement (10).

8. Actuator arrangement (10) according to claim 7,
wherein the actuator output varies in spanwise direction of the rotor blade (20) such that the movement of the aerodynamic device changes in spanwise direction of the rotor blade (20).

9. Actuator arrangement (10) according to one of the claims 7 and 8,
wherein the local variation of the actuator output is achieved by locally varying the shape of the actuator (14).

10. Actuator arrangement (10) according to one of the claims 7 and 8,
wherein the local variation of the actuator output is achieved by locally varying the shape of the hinge portion (13) and/or of the attachment portion (11) and/or of the connection portion (12) of the actuator arrangement (10).

11. Actuator arrangement (10) according to one of the claims 7 and 8,
wherein the local variation of the actuator output is achieved by locally varying the stiffness of the hinge portion (13).

12. Movable trailing edge arrangement (40) comprising an aerodynamic device (30) and an actuator arrangement (10) according to one of the preceding claims,
wherein
- the attachment portion (11), the connection portion (12) and the hinge portion (13) build one single piece;
- the aerodynamic device (30) builds another single piece; and
- both single pieces are connected with each other.

13. Rotor blade arrangement comprising a rotor blade (20) of a wind turbine and an actuator arrangement (10) according to one of the preceding claims, wherein the actuator arrangement (10) is attached to the rotor blade (20) at the trailing edge section (23) of the rotor blade (20).

## Patentansprüche

1. Stellgliedanordnung (10) zum Bewegen einer aerodynamischen Vorrichtung (30) in Bezug auf ein Rotorblatt (20) einer Windenergieanlage, wobei die Stellgliedanordnung (10) Folgendes umfasst:
- einen Befestigungsteil (11), der zum Befestigen der Stellgliedanordnung (10) am Hinterkantenabschnitt (23) des Rotorblatts (20) angeordnet und ausgelegt ist,
- einen Verbindungsteil (12), der zum Verbinden der aerodynamischen Vorrichtung (30) mit der Stellgliedanordnung (10) angeordnet und ausgelegt ist,
- einen Gelenkteil (13), der den Befestigungsteil (11) und den Verbindungsteil (12) verbindet, wobei der Gelenkteil (13) eine Relativbewegung des Verbindungsteils (12) in Bezug auf den Befestigungsteil (11) um eine Rotationsachse ermöglicht, die im Wesentlichen in Längsrichtung des Rotorblatts (20) ausgerichtet ist, und
- ein pneumatisches Stellglied (14) zum Auslösen der Drehbewegung (131) des Verbindungsteils (12) in Bezug auf den Befestigungsteil (11), wobei es sich bei der Bewegung um eine reversible Bewegung handelt,
**dadurch gekennzeichnet, dass**
- die Stellgliedanordnung (10) zum lösbaren Verbinden der aerodynamischen Vorrichtung (30) mit dem Verbindungsteil (12) angeordnet und ausgelegt ist.

2. Stellgliedanordnung (10) nach Anspruch 1,
wobei die Stellgliedanordnung (10) zum Befestigen an der Außenfläche des Hinterkantenabschnitts (23) des Rotorblatts (20) angeordnet und ausgelegt ist, so dass sich die Stellgliedanordnung (10) in Bezug auf das Rotorblatt (20) außen befindet.

3. Stellgliedanordnung (10) nach einem der vorhergehenden Ansprüche,
wobei die aerodynamische Vorrichtung (30) die Form einer Klappe aufweist.

4. Stellgliedanordnung (10) nach einem der vorhergehenden Ansprüche,
wobei der Gelenkteil (13) aus einem elastischen Material hergestellt ist.

5. Stellgliedanordnung (10) nach einem der vorhergehenden Ansprüche,
wobei sich das Stellglied (14) durch ein unter Druck stehendes, gasförmiges Medium aufblasen lässt, so dass die Drehbewegung (131) des Verbindungsteils (12) in Bezug auf den Befestigungsteil (11) ausgelöst wird.

6. Stellgliedanordnung (10) nach einem der vorhergehenden Ansprüche,
wobei es sich bei dem Stellglied (14) um einen elastischen Schlauch handelt.

7. Stellgliedanordnung (10) nach einem der vorhergehenden Ansprüche,
wobei auf der Grundlage eines einzigen Stellgliedeingangsdrucks anhand einer lokal variierenden Konfiguration der Stellgliedanordnung (10) eine lokal variable Stellleistung erzielt wird.

8. Stellgliedanordnung (10) nach Anspruch 7,
wobei die Stellleistung in Längsrichtung des Rotorblatts (20) variiert, so dass sich die Bewegung der aerodynamischen Vorrichtung in Längsrichtung des Rotorblatts (20) ändert.

9. Stellgliedanordnung (10) nach einem der Ansprüche 7 und 8,
wobei die lokale Variation der Stellleistung durch lokales Variieren der Form des Stellglieds (14) erzielt wird.

10. Stellgliedanordnung (10) nach einem der Ansprüche 7 und 8,
wobei die lokale Variation der Stellleistung durch lokales Variieren der Form des Gelenkteils (13) und/oder des Befestigungsteils (11) und/oder des Verbindungsteils (12) der Stellgliedanordnung (10) erzielt wird.

11. Stellgliedanordnung (10) nach einem der Ansprüche 7 und 8,
wobei die lokale Variation der Stellleistung durch lokales Variieren der Steifigkeit des Gelenkteils (13) erzielt wird.

12. Bewegliche Hinterkantenanordnung (40) mit einer aerodynamischen Vorrichtung (30) und einer Stellgliedanordnung (10) nach einem der vorhergehenden Ansprüche,
wobei
- der Befestigungsteil (11), der Verbindungsteil (12) und der Gelenkteil (13) ein einzelnes Teil bilden,
- die aerodynamische Vorrichtung (30) ein weiteres einzelnes Teil bildet und
- beide Einzelteile miteinander verbunden sind.

13. Rotorblattanordnung mit einem Rotorblatt (20) einer Windenergieanlage und einer Stellgliedanordnung (10) nach einem der vorhergehenden Ansprüche, wobei die Stellgliedanordnung (10) am Hinterkantenabschnitt (23) des Rotorblatts (20) an dem Rotorblatt (20) befestigt ist.

## Revendications

1. Agencement d'actionneur (10) permettant de déplacer un dispositif aérodynamique (30) par rapport à une pale de rotor (20) d'une turbine éolienne, l'agencement d'actionneur (10) comprenant
- une partie de fixation (11) qui est agencée et préparée pour fixer l'agencement d'actionneur (10) au niveau de la section de bord arrière (23) de la pale de rotor (20),
- une partie de liaison (12) qui est agencée et préparée pour relier le dispositif aérodynamique (30) à l'agencement d'actionneur (10),
- une partie charnière (13) qui est reliée à la partie de fixation (11) et à la partie de liaison (12), dans lequel la partie charnière (13) permet un mouvement relatif de la partie de liaison (12) vis-à-vis de la partie de fixation (11) autour d'un axe rotatif qui est orienté sensiblement dans le sens de l'envergure de la pale de rotor (20), et
- un actionneur pneumatique (14) permettant d'induire le mouvement de rotation (131) de la partie de liaison (12) par rapport à la partie de fixation (11), dans lequel le mouvement est un mouvement réversible
**caractérisé en ce que**
- l'agencement d'actionneur (10) est agencé et préparé pour relier de façon amovible le dispositif aérodynamique (30) à la partie de liaison (12).

2. Agencement d'actionneur (10) selon la revendication 1, dans lequel l'agencement d'actionneur (10) est agencé et préparé pour être fixé à la surface externe de la section de bord arrière (23) de la pale de rotor (20), de sorte que l'agencement d'actionneur (10) est situé à l'extérieur par rapport à la pale de rotor (20).

3. Agencement d'actionneur (10) selon l'une des revendications précédentes, dans lequel le dispositif aérodynamique (30) présente la forme d'un rabat.

4. Agencement d'actionneur (10) selon l'une des revendications précédentes, dans lequel la partie de charnière (13) est composée d'un matériau élastique.

5. Agencement d'actionneur (10) selon l'une des revendications précédentes, dans lequel l'actionneur (14) est gonflable par un milieu gazeux pressurisé afin d'induire le mouvement de rotation (131) de la partie de liaison (12) par rapport à la partie de fixation (11).

6. Agencement d'actionneur (10) selon l'une des revendications précédentes, dans lequel l'actionneur (14) est un tuyau élastique.

7. Agencement d'actionneur (10) selon l'une des revendications précédentes, dans lequel, sur la base d'une seule pression d'entrée d'actionneur, une sortie d'actionneur variable localement est obtenue grâce à une configuration variant localement de l'agencement d'actionneur (10).

8. Agencement d'actionneur (10) selon la revendication 7, dans lequel la sortie d'actionneur varie dans le sens de l'envergure de la pale de rotor (20) de sorte que le mouvement du dispositif aérodynamique change dans le sens de l'envergure de la pale de rotor (20).

9. Agencement d'actionneur (10) selon l'une des revendications 7 et 8, dans lequel la variation locale de la sortie d'actionneur est obtenue en variant localement la forme de l'actionneur (14).

10. Agencement d'actionneur (10) selon l'une des revendications 7 et 8, dans lequel la variation locale de la sortie d'actionneur est obtenue en variant localement la forme de la partie charnière (13) et/ou de la partie de fixation (11) et/ou de la partie de liaison (12) de l'agencement d'actionneur (10).

11. Agencement d'actionneur (10) selon l'une des revendications 7 et 8, dans lequel la variation locale de la sortie d'actionneur est obtenue en variant localement la rigidité de la partie charnière (13).

12. Agencement de bord arrière amovible (40) comprenant un dispositif aérodynamique (30) et un agencement d'actionneur (10) selon l'une des revendications précédentes, dans lequel
- la partie de fixation (11), la partie de liaison (12) et la partie charnière (13) sont construites sur une seule pièce ;
- le dispositif aérodynamique (30) est construit sur une autre pièce unique ; et
- les deux pièces uniques sont reliées l'une à l'autre.

13. Agencement de pale de rotor comprenant une pale de rotor (20) d'une turbine éolienne et un agencement d'actionneur (10) selon l'une des revendications précédentes, dans lequel l'agencement d'actionneur (10) est fixé à la pale de rotor (20) au niveau de la section de bord arrière (23) de la pale de rotor (20).
